# EUROPEAN PATENT APPLICATION

(11) **EP 2 298 089 A1**
(43) Date of publication of application: **23.03.2011**
(21) Application number: 09168720.2
(22) Date of filing: 26.08.2009
(51) Int. Cl.: A23L 3/3508, A23L 3/358, A23B 4/12, A23B 4/20, A23B 4/24, A23L 1/22

(54) **Foodstuff treatment composition**

(71) Applicant: Chemische Fabrik Budenheim KG, 55257 Budenheim (DE)
(72) Inventor: Schnee, Rainer, 55130 Mainz (DE)
(74) Representative: Weber, Roland

(57) **Abstract**

A foodstuff treatment composition, particularly for the treatment of meat, meat products, fish and seafood products, the composition comprising a combination of sodium lactate and/or potassium lactate and at least one sodium and/or potassium phosphate salt, and the composition is in the form of a powder, granules, a slurry or a paste.

## Description

### Subject of the invention

The present invention is directed to a foodstuff treatment composition, particularly for the treatment of meat, meat products, fish and seafood products. The composition of the present invention is in the solid state, preferably in the form of a powder or granules, and the composition provides antimicrobial properties to the foodstuff.

The present invention also pertains to an aqueous solution or dispersion containing the foodstuff treatment composition of the invention, as well as to the use of the foodstuff treatment composition for the treatment of foodstuff, particularly meat, meat products, fish and seafood products, with an increased shelf-life stability and an increased resistance against the growth of bacteria, in particular Listeria monocytogenes, Clostridia, and spoilage bacteria such as Lactobacilli.

The present invention also includes a foodstuff, such as an uncooked or cooked meat, meat product, fish or seafood product, obtainalble by the treatment of a foodstuff with the foodstuff treatment composition of the present invention.

### Background of the invention

Avoiding spoilage is one of the major objectives in the production of foodstuffs. The shelf life of foodstuffs is significantly limited due to the growth of undesired microorganisms and through microbial degradation products. Undesired microorganisms in and on foodstuffs are, for example, Salmonellae, Listeria, E. coli, Campylobacter, Arcobacter, Aeromonas and Clostridia. However, it is known that the durability of foodstuffs can be improved by physical and chemical methods.

Common foodstuff preservation methods include heating, cooling, deep-freezing, drying, salting, acidifying, sugaring, addition of preserving agents, addition of bacteriocin-forming lactobacilli, application of vacuum or protective gas to packed foodstuffs, and treatment with ionising radiation. These methods are based on the reduction of the undesired microorganisms or the reduction of their growth speed.

High temperature heating, deep freezing, drying and water activity (AW) values below 0.6 essentially completely prevent microbial spoilage. However, thermal treatment, drying, salting, acidifying, and sugaring have the disadvantage of deteriorating the organoleptic and/or physical properties of the foodstuff. Therefore, the application of such treatment methods is limited. Also, many preserving agents currently used in foodstuffs suffer from the disadvantage that most of them exhibit a more or less limited range of efficacy. Such presently used preserving agents include, for example, sulfites, diphenyl (biphenyl), orthophenylphenol, sodium orthophenylphenol, Nisin, Natamycin, hexamethylenetetramin, dimethyldicarbonate, nitrite, nitrate, propionic acid, and propionate.

Further, some types of acids and their salts exhibit bacteriostatic and/or bactericidal efficacy against different types of microorganisms. Widely used preserving agents of the acid type or acid salt type are, for example, lactates, citrates, acetates, and diacetates. However, these compounds have the disadvantage that they exhibit a rather limited range of efficacy, or, such as for lactate, are usually only applied in the solved form.

US 2004115315 describes the use of encapsulated lactic acid in meat products to improve the shelf life.

P. Delaquis et al., "Effect of acidification with encapsulated lactate on microbiological, textural and sensory properties of cooked comminuted fish loaves", Journal of Aquatic Food Product Technology, FSTA, 1994, describes the addition of encapsulated lactic acid with a melting point of 60°C to pieces of fish.

The use of sodium lactate and potassium lactate in meat and poultry products for purposes of inhibiting the growth of certain pathogens is generally known and permitted, except for infant formulas and infant food. Sodium lactate and potassium lactate, singly or in combination, can be used in meat products at levels up to 4.8 percent by weight of the total foodstuff weight for purposes of inhibiting the growth of certain pathogens. The FDA has listed sodium lactate and potassium lactate for use with no limitations, as long as they are used under good manufacturing practice. The lactates are usually used in the form of aqueous solutions of 60 wt-% up to 78% solids in water.

The addition of lactic acid and/or its salts to meat products or other foodstuffs may be associated with a number of disadvantages. First, the addition of an acidic compound may detrimentally affect the taste of the meat, its structure, the yield and various other properties. This means that a balance needs to be found between the amount and type of lactic acid or lactate that can be added without detrimentally affecting the properties of the foodstuff and the microbiological resistance that can be obtained. Second, the solubility of lactates and lactic acid in the presence of phosphates and sodium chloride is limited, especially at the low temperatures of about 0 to 4°C, which are used in meat, meat products, fish and seafood processing. A typically used concentration of 2 wt-% sodium lactate in a brine with 16 wt-% sodium chloride and 4 wt-% phosphate results in a cloudy solution containing undissolved particles. Third, the meat, meat products, fish and seafood processing industry prefers to use solid type ingredients, such as powders or granules, as they are easier to store, to transport and to handle. Also, pricing of solid type products is easier to calculate.

Phosphates are also used as additives in foodstuff processing, and they provide many functional uses. It is common to use phosphates in powder form as functional ingredients for protein activation and water binding. The phosphates have a specific effect on the water retention of meat protein. Fat and water losses are significantly reduced. The buffering capacity of the phosphates stabilises the pH. Polyphosphates are able chelate polyvalent cations such as calcium, magnesium, iron and copper. The effective sequestering of Calcium and Magnesium ions results in better water binding properties as both cations cross link proteins, followed by reduced swelling characteristics. This is especially important if hard water is used for processing. The effective sequestering of pro-oxidative metal ions such as iron and copper results in less oxidative deterioration during processing and less potential of rancidity development and undesirable colour development and thus protects flavor, colour and texture of the product. Polyphosphates also exhibit bacteriostatic effects, which are higher at increasing chain lengths.

Flavors or Oleoresins are extracts from plants, herbs, seeds or fruits which are primarily used to add a specific flavor to a food system or to cover a specific off-flavor. More than 50 years ago a combination of polyphosphate and lemon juice concentrate was developed to retard the formation of off flavors due to oxidative rancidity during processing and storage of meat, poultry and seafood products and to retain original meat color by retarding color fading. The preferred flavor used in the present application consists mainly out of citrus plant extracts in combination with extracts from olives, garlic, grape seed and rosmary and covers effectivly off flavors caused by use of lactic acid and lactates.

Phosphates and flavors are usually provided in the dry form as powders, whereas lactates are handled in the form of aqueous solutions of 60 wt-% or higher. Such solutions of lactate are applied to the foodstuffs in a separate step from the application of the solid treatment ingredients, such as phosphates. Flavors, flavor extracts and/or spices. are separately added in the dry form or, preferably, in the form of aqueous solutions, also to mask the off flavor of the lactates. The separate application of the different ingredients is a disadvantage for the processors.

### Object of the Invention

It is generally desired and an objective of the present invention to provide foodstuff treatment compositions that have a broad range of efficacy to improve the shelf life of foodstuffs and/or preserve the foodstuffs from the action of pathogenic germs, and that have no or few deteriorating effects on the organoleptic and/or physical properties of the foodstuffs. It is further desired that the preserving compositions are active at low temperatures and/or achieve the desired effect quickly and/or do only form degradation products that are natural components and that provide, therefore, a high degree of tolerance and safety.

### Description of the Invention

The present invention provides a foodstuff treatment composition, particularly for the treatment of meat, meat products, fish and seafood products, the composition comprising a combination of sodium lactate and/or potassium lactate and at least one sodium and/or potassium phosphate salt, and the composition is in the form of a powder, granules, a slurry or a paste.

In a preferred embodiment of the invention the foodstuff treatment composition further comprises at least one flavor compound, preferably in the amount of 1 to 10 wt% of the dry weight of the composition, preferably 2 to 8 wt%, more preferably 4 to 6 wt%.

In another preferred embodiment of the invention the at least one sodium and/or potassium phosphate salt is selected from orthophosphates, pyrophosphates, metaphosphates and polyphosphates.

In another preferred embodiment of the invention the at least one sodium and/or potassium phosphate salt is selected from tri-sodium phosphate (Na₃PO₄), tetra-sodium pyrophosphate (Na₄P₂O₇), sodium tripolyphosphate (Na₅P₃O₁₀), tri-potassium phosphate (K₃PO₄), tetra- potassium pyrophosphate (K₄P₂O₇), potassium tripolyphosphate (K₅P₃O₁₀).

In another preferred embodiment of the invention the amount of sodium lactate and/or potassium lactate in the foodstuff treatment composition is 5 to 40 wt% of the dry weight of the composition, preferably 10 to 30 wt%, more preferably 15 to 25 wt%.

In another preferred embodiment of the invention the amount of the at least one sodium and/or potassium phosphate salt in the foodstuff treatment composition is 40 to 90 wt% of the dry weight of the composition, preferably 50 to 80 wt%, more preferably 60 to 70 wt%.

The present invention also pertains to an aqueous solution of the herein described foodstuff treatment composition of any of the foregoing claims for the treatment of foodstuff, particularly for the treatment of meat, meat products, fish and seafood products, wherein the aqueous solution comprises the foodstuff treatment composition in the amount of 0.25 to 15 wt%, preferably 0.5 to 10 wt%, more preferably 0.75 to 8 wt%.

The present invention further includes the use of the herein described foodstuff treatment composition or the aqueous solution of the foodstuff composition for the treatment of foodstuff, particularly for the treatment of meat, meat products, fish and seafood products, to increase the resistance of the foodstuff against the growth of bacteria, in particular *Listeria monocytogenes*, Clos*tridia*, and spoilage bacteria, whereby the foodstuff treatment composition or the aqueous solution is applied to the foodstuff in an amount to achieve a concentration of 0.25 to 1.5 wt% lactate(s) plus phosphate(s) (from the foodstuff treatment composition) in the treated foodstuff.

The present invention further refers to a foodstuff obtainable by the treatment of a foodstuff with the herein described foodstuff treatment composition or aqueous solution of the foodstuff composition.

The present invention also pertains to a method for the preparation of the foodstuff treatment composition of the present invention, the method comprising the steps of
a) preparing an aqueous solution of sodium lactate and/or potassium lactate comprising 40 to 80 wt% lactate, preferably 50 to 70 wt% lactate, more preferably 55 to 65 wt% lactate, and optionally 3 to 30 wt% flavor, preferably 6 to 24 wt% flavor, more preferably 12 to 18 wt% flavor,
b) combining about 0.5 to 1.5 weight parts of the aqueous lactate solution of step a) with about 2.0 weight parts of the at least one sodium and/or potassium phosphate salt, whereby the phosphate salt(s) is(are) preferably in the anhydrous or water-free state before combination with the aqueous solution, and
   whereby the ratio of aqueous lactate solution to phosphate salt is selected to achieve the composition is in the form of a powder, granules, a slurry or a paste.

In an embodiment of the method for the preparation of the foodstuff treatment composition of the present invention additional additives, ingredients, spices etc. are combined with the aqueous solution of step a) and/or the phosphate salt(s) of step b).

The present invention further includes that the foodstuff treatment composition of the present invention obtainable or obtained by the method comprising the steps of
a) preparing an aqueous solution of sodium lactate and/or potassium lactate comprising 40 to 80 wt% lactate, preferably 50 to 70 wt% lactate, more preferably 55 to 65 wt% lactate, and optionally 3 to 30 wt% flavor, preferably 6 to 24 wt% flavor, more preferably 12 to 18 wt% flavor,
b) combining about 0.5 to 1.5 weight parts of the aqueous lactate solution of step a) with about 2.0 weight parts of the at least one sodium and/or potassium phosphate salt, whereby the phosphate salt(s) is(are) preferably in the anhydrous or water-free state before combination with the aqueous solution, and
whereby the ratio of aqueous lactate solution to phosphate salt is selected to achieve the composition is in the form of a powder, granules, a slurry or a paste.

It has now surprisingly been found that a combination of at least one lactate salt and at least one phosphate salt, and optionally, but preferably, at least one flavor compound, can be produced into a solid product of the powder or granule type or in the form of a slurry or paste. Thereby, the foodstuff treatment composition of the invention is easy to handle, and it provides a ready to use combination of the required lactates, phosphates and flavors in one single product. The foodstuff treatment composition of the invention is easy to weigh and dose, since it is in the form of a powder, granules, a slurry or a paste, and it is flowable. It is not required, as in the prior art, to weigh in and dose several

It has further been found that the foodstuff treatment composition of the present invention exhibits a broad range of antimicrobial efficacy. In the sense of the present invention, a broad range of antimicrobial efficacy means that the composition is effective against several foodstuff spoiling agents.

The foodstuff treatment composition of the present invention further has several advantages over known compositions or over the separate application of single compounds. The composition is a single solid product, it exhibits no or minimum off flavor, it causes no solubility problems, it has good antimicrobial properties, and it saves cost due to convenient application, handling and storage.

The foodstuff treatment composition of the present invention provides excellent water retention and antimicrobial effects combined with a very acceptable flavor so that it can replace the separate use of phosphates and lactate solutions. The use of potassium lactate in the compound can reduce the sodium content compared to the prior use of sodium lactate solutions. The compound has excellent solubility, especially at low temperatures and in the presence of salt. A brine for the injection treatment of foodstuff, for example, with the desired concentration of the foodstuff treatment composition of the present invention is crystal clear, whereas a brine of the commonly used concentrations of phosphates of about 0.3 to 0.5 wt% and sodium lactates of about 0.5 to 3.0 wt% are cloudy to turbid with undissolved particles.

The present invention provides foodstuffs, such as meat, meat products, fish and seafood products, with an increased shelf life stability and an increased resistance against the growth of bacteria, in particular Listeria monocytogenes, Clostridia, and spoilage bacteria such as Lactobacilli. The preparation process for manufacturing foodstuffs using the composition according to the invention comprises, for example, combining an uncooked meat, meat products, fish or seafood product with a compound of phosphates, lactates and preferably a flavor compound, followed by further processing such as packing or cooking. The present invention preferably makes use of particular phosphates which are functional in protein activation of meat, meat products, fish or seafood and have also properties to absorb lactates and flavors still keeping their powder type or granule type properties.

The foodstuff treatment composition of the present invention is in the solid state, preferably in the form of a powder or granules, or in the form of a slurry or a paste. It is preferably prepared by mixing the preferably anhydrous or water-free phosphate salts with an aqueous solution of the lactate or mixture of lactates, preferably a 40 to 80 wt%, preferably 50 to 70 wt% lactate solution. Preferably, the aqueous lactate solution is also supplemented with or comprises 3 to 30 wt% of flavor(s). It has surprisingly been found that the combination of the dry phosphate salts with the aqueous lactate solution does not necessarily result a liquid solution or dispersion end product. It has been found that, when using an appropriate type and amount of the phosphate salts and an appropriate concentration and amount of the aqueous lactate solution, the solvent water of the lactate solution can be taken up and bound as water of crystallisation resulting in a dry solid end product of the powder type or granular type, or in a good to handle slurry or paste. For example, anhydrous sodium tripolyphosphate is converted into the hexahydrate form, when it is combined with the aqueous solution. This finding of 'water conversion' during the combination of solids with an aqueous solutions was surprising and resulted in the new and beneficial form of the foodstuff treatment composition of the invention.

The foodstuff treatment composition is usually excellent soluble in brines, also at low temperatures, and it does not lower the pH of the foodstuff product. The foodstuff treatment composition provides similar or even better antimicrobial properties compared to the separate use of phosphates, lactates and flavors, but it is much better to store, to transport and to handle.

It has further surprisingly been found that the bacteriostatic effect of the used phosphates, particularly polyphosphates, will be significantly increased by the integration of lactate and flavor into the product. The best effect has been achieved by the combination of sodium tripolyphosphate, potassium lactate and flavor.

At the same time, the foodstuff treatment composition of the invention provides excellent water retention properties and good antimicrobial activities in foodstuffs, particularly in meat, meat products, fish and seafood products, compared to the separate application of phosphates and lactate solutions. The resulting off-flavor from lactate can be covered and neutralized by a flavor from herbs and other plant materials. The flavors are known in the foodstuff industry..

The foodstuff treatment composition of the invention provides to the foodstuffs a high resistance against the growth of pathogenic bacteria, in particular Listeria monocytogenes, without detrimentally affecting the taste and other properties of the product. An increased resistance against other bacteria such as Clostridia and spoilage bacteria such as Lactobacilli is obtained at the same time.

Preferably, the foodstuff treatment composition of the invention is added to the foodstuffs in an amount to achieve a concentration of 0.25 to 1.5 wt%, more preferably 0.4 to 0,7 wt-% lactate(s) plus phosphate(s) (from the foodstuff treatment composition) in the treated foodstuff. However, the exact amount of the foodstuff treatment composition to be added will depend on the components of the composition and their relative amounts, on the nature and the composition of the foodstuff, and other factors. Determining the exact amount for a particular application is a matter of routine trial which is well within the scope of the skilled person.

If the foodstuff treatment composition of the invention is to be applied to the foodstuffs in the liquid form, it is generally provided in the form of an aqueous composition, which may be an aqueous solution or an aqueous dispersion or suspension. An aqueous composition according to the invention generally contains the foodstuff treatment composition of the invention in the amounts of 0.25 to 15 wt%, preferably 0.5 to 10 wt%, more preferably 0.75 to 8 wt%.

If the foodstuff treatment composition of the invention is to be applied to the foodstuffs in the dry form, it will generally be added in the form of a powder or granules by stirring or mixing it through the food product. In the case of pieces of meat, meat products, fish and seafood, the foodstuff treatment composition of the invention is preferably applied in the liquid form as an aqueous composition, for example by injecting the composition into the foodstuff or by dipping the foodstuffs into the aqueous composition. To take most advantage of the effects of the foodstuff treatment composition of the invention it is important that the active components are present not only on the outer surface of the foodstuff, but also inside.

The foodstuffs, particularly meat, meat products, fish and seafood products, can be cured or uncured. However, because uncured foodstuff products are more susceptible for the growth of microorganisms than cured foodstuff products, the present invention is particularly advantageous for the application to uncured foodstuffs. Examples of suitable uncured foodstuffs are cooked chicken, turkey meat, meat products, roast beef and all seafood products. Examples of suitable cured meat products are cured pork ham, frankfurters, and other cured sausages. For good order's sake is noted that in the present specification the word meat also includes poultry.

### Examples

The present invention is illustrated by the following examples, without in any way being limited thereto or thereby.

### 1. Preparation of a foodstuff treatment composition of the invention

To prepare a foodstuff treatment composition of the invention the following components were combined in a lab mixer:

| | |
|---|---|
| 200 weight parts | sodium tripolyphosphate |
| 100 weight parts | 60 wt% aqueous solution of potassium lactate |
| 15 weight parts | flavor (Cegemett^{®}, Cognis GmbH) |

The flavor in this recipe is provided in the form of a flavor extract in a glycerol / water mixture (60 glycerol :40 water). The flavor extract is first mixed with the lactate solution, and then the sodium tripolyphosphate is added and mixed thereto.

### 2. Preparation of poultry meat rolls

The herein prepared solid foodstuff treatment composition of the present invention was dissolved in a brine containing water, sodium chloride, and the further components as indicated below in table 1. The brine solution was added to poultry breast meat at a ratio of 30% brine and 70% poultry meat (1500g brine + 3500g poultry meat = 5000g total batch weight). The poultry breast with brine was tumbled for 16 hours in repeated periods of 40 minutes tumbling with 20 minutes rest in between. The meat was stored for 1 hour at 4°C to allow brine distribution. Poultry rolls with an average diameter of 5 to 8 cm were prepared. The poultry rolls were cooked for about 3 hours in a water bath at 90°C, and subsequently chilled in ice water. The final poultry rolls were stored at 4°C.

The rolls were evaluated for pH of the final product, cooking loss, total yield, microbiological contamination, structure and bite observation, taste observation, appearance, and appearance and solubility of the brine solution. The results are shown below in table 2.

For the evaluation of the microbiological contamination prepared rolls were homogenized for 1 min in a Stomacher. The homogenates in 10⁻⁵ dilution thereof in sterile dilution fluid were plated onto Caso agar manually. The plates were incubated for 72 hours at 30°C. Total aerobic plate count was analysed. The colonies were counted manually with following results.

**Table 1**

| **Composition** | **Batch # [wt% in brine]** | | | |
|---|---|---|---|---|
| | **1** | **2** | **3** | **4** |
| water / ice | 91,77 | 91,47 | 90,82 | 83,11 |
| STPP | 1,73 | - | - | 1,73 *) |
| SL | - | - | - | 8,66 *) |
| FTC | - | 2,03 | 2,68 | - |
| NaCl | 6,50 | 6,50 | 6,50 | 6,50 |

| | | | | |
|---|---|---|---|---|
| STPP = sodium tripolyphosphate SL = sodium lactate FTC = food treatment composition of the invention *) In batch #4 STPP was added to the poultry breast meat in the form of a dry powder, and SL was subsequently added in the form of a brine solution in water with NaCl (= conventional way of application). | | | | |

**Table 2**

| **Tested** | **Batch #** | | | |
|---|---|---|---|---|
| **Property** | **1** | **2** | **3** | **4** |
| pH final product | 5,98 | 5,94 | 6,01 | 6,03 |
| cooking loss [g] | 11,1 | 13,2 | 8,0 | 106,2 |
| cooking loss [wt%] | 0,3 | 0,4 | 0,2 | 3,0 |
| total yield [wt%] | 99,7 | 99,6 | 99,8 | 97,0 |
| microbiological contamination [colonies] | 1,0 x 10⁷ | 3,2 x 10⁵ | 5,5 10⁴ | 2,9 x 10⁴ |
| structure / bite observation | rubbery, to firm / wet | good / wet | good / wet | fibrous / wet |
| taste observation | good | good | good | acidly, salty |
| appearance | acceptable | good | good | fractional meet pieces |
| brine solution | clear, quickly soluble | dimmish, soluble | dimmish, soluble | very cloudy, poorly soluble |

## Claims

1. A foodstuff treatment composition, particularly for the treatment of meat, meat products, fish and seafood products, the composition comprising a combination of sodium lactate and/or potassium lactate and at least one sodium and/or potassium phosphate salt, and the composition is in the form of a powder, granules, a slurry or a paste.

2. The composition of claim 1, further comprising at least one flavor compound, preferably in the amount of 1 to 10 wt% of the dry weight of the composition, preferably 2 to 8 wt%, more preferably 4 to 6 wt%.

3. The composition of any of the foregoing claims, wherein the at least one sodium and/or potassium phosphate salt is selected from orthophosphates, pyrophosphates, metaphosphates and polyphosphates.

4. The composition of any of the foregoing claims, wherein the at least one sodium and/or potassium phosphate salt is selected from tri-sodium phosphate (Na₃PO₄), tetra-sodium pyrophosphate (Na₄P₂O₇) sodium tripolyphosphate (Na₅P₃O₁₀), tri-potassium phosphate (K₃PO₄), tetra- potassium pyrophosphate (K₄P₂O₇), potassium tripolyphosphate (K₅P₃O₁₀).

5. The composition of any of the foregoing claims, wherein the amount of sodium lactate and/or potassium lactate is 5 to 40 wt% of the dry weight of the composition, preferably 10 to 30 wt%, more preferably 15 to 25 wt%.

6. The composition of any of the foregoing claims, wherein the amount of the at least one sodium and/or potassium phosphate salt is 40 to 90 wt% of the dry weight of the composition, preferably 50 to 80 wt%, more preferably 60 to 70 wt%.

7. An aqueous solution of the foodstuff treatment composition of any of the foregoing claims for the treatment of foodstuff, particularly for the treatment of meat, meat products, fish and seafood products, wherein the aqueous solution comprises the foodstuff treatment composition in the amount of 0.25 to 15 wt%, preferably 0.5 to 10 wt%, more preferably 0.75 to 8 wt%.

8. The use of the foodstuff treatment composition or the aqueous solution of any of the foregoing claims for the treatment of foodstuff, particularly for the treatment of meat, meat products, fish and seafood products, to increase the resistance of the foodstuff against the growth of bacteria, in particular *Listeria monocytogenes*, *Clostridia*, and spoilage bacteria, whereby the foodstuff treatment composition or the aqueous solution is applied to the foodstuff in an amount to achieve a concentration of 0.25 to 1.5 wt% lactate(s) plus phosphate(s) (from the foodstuff treatment composition) in the treated foodstuff.

9. A foodstuff obtainable by the treatment of a foodstuff with the foodstuff treatment composition or the aqueous solution of any of the foregoing claims.

10. A method for the preparation of a foodstuff treatment composition of any of the foregoing claims comprising the steps of
a) preparing an aqueous solution of sodium lactate and/or potassium lactate comprising 40 to 80 wt% lactate, preferably 50 to 70 wt% lactate, more preferably 55 to 65 wt% lactate, and optionally 3 to 30 wt% flavor, preferably 6 to 24 wt% flavor, more preferably 12 to 18 wt% flavor,
b) combining about 0.5 to 1.5 weight parts of the aqueous lactate solution of step a) with about 2.0 weight parts of the at least one sodium and/or potassium phosphate salt, whereby the phosphate salt(s) is(are) preferably in the anhydrous or water-free state before combination with the aqueous solution, and
whereby the ratio of aqueous lactate solution to phosphate salt is selected to achieve the composition is in the form of a powder, granules, a slurry or a paste.

11. The method of claim 10, whereby additional additives, ingredients, spices etc. are additionally combined with the aqueous solution of step a) and/or the phosphate salt(s) of step b).

12. The foodstuff treatment composition of any of the foregoing claims obtainable or obtained by the method comprising the steps of
a) preparing an aqueous solution of sodium lactate and/or potassium lactate comprising 40 to 80 wt% lactate, preferably 50 to 70 wt% lactate, more preferably 55 to 65 wt% lactate, and optionally 3 to 30 wt% flavor, preferably 6 to 24 wt% flavor, more preferably 12 to 18 wt% flavor,
b) combining about 0.5 to 1.5 weight parts of the aqueous lactate solution of step a) with about 2.0 weight parts of the at least one sodium and/or potassium phosphate salt, whereby the phosphate salt(s) is(are) preferably in the anhydrous or water-free state before combination with the aqueous solution, and
whereby the ratio of aqueous lactate solution to phosphate salt is selected to achieve the composition is in the form of a powder, granules, a slurry or a paste.
